(19) Europäisches Patentamt
European Patent Office
Office européen des brevets

(11) **EP 1 132 584 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
*F01N 3/08* *(2006.01)*       *F02D 41/40* *(2006.01)*
*F02D 37/02* *(2006.01)*

(21) Anmeldenummer: **01250072.4**

(22) Anmeldetag: **07.03.2001**

(54) **Verfahren und Vorrichtung zur Steuerung einer Heizmassnahme in einer Abgasreinigungsanlage von Brennkraftmaschinen**

Method and apparatus for control of heating an exhaust gas purification system of internal combustion engines

Procédé et dispositif pour commander le chauffage d'une installation de purification de gaz d'échappement des moteurs à combustion interne

(84) Benannte Vertragsstaaten:
**AT BE CH CY DE DK ES FI FR GB GR IE IT LI LU MC NL PT SE TR**

(30) Priorität: **09.03.2000 DE 10011090**
**31.03.2000 DE 10016219**

(43) Veröffentlichungstag der Anmeldung:
**12.09.2001 Patentblatt 2001/37**

(73) Patentinhaber: **Volkswagen Aktiengesellschaft**
**38436 Wolfsburg (DE)**

(72) Erfinder:
• **Pott, Ekkehard**
**38518 Gifhorn (DE)**

• **Spiegel, Leo**
**71665 Vaihingen, Enz (DE)**

(74) Vertreter: **Schneider, Henry**
**Anwaltskanzlei**
**Gulde Hengelhaupt Ziebig & Schneider**
**Wallstrasse 58/59**
**10179 Berlin (DE)**

(56) Entgegenhaltungen:
**EP-A- 0 826 869        EP-A- 0 831 226**
**EP-A- 0 856 645        WO-A-00/09870**
**DE-A1- 19 753 842      DE-C1- 4 239 357**
**DE-C1- 19 823 513**

## EP 1 132 584 B1

**Beschreibung**

Die Erfindung betrifft ein Verfahren zur Steuerung einer Heizmaßnahme in einer Abgasreinigungsanlage von Brennkraftmaschinen mit den im Anspruchs 1 genannten Merkmalen sowie eine Vorrichtung, mit der die Steuerung durchgeführt werden kann mit den im Anspruch 16 genannten Merkmalen.

Es ist bekannt, im Abgasstrang von Brennkraftmaschinen Abgasreinigungsanlagen anzuordnen, die es ermöglichen eine Emission von umweltrelevanten Bestandteilen des Abgases wie Rußpartikel, Kohlenmonoxid CO, unvollständig verbrannte Kohlenwasserstoffe HC und Stickoxide $NO_X$ zu reduzieren. Dazu umfassen derartige Abgasreinigungsanlagen Partikelfilter und/oder Katalysatorsysteme. Letztere beinhalten unter anderem Katalysatoren, die eine Oxidation von CO und HC mit Luftsauerstoff begünstigen (Oxidationskatalysatoren), und/oder Katalysatoren, die eine Reduktion von $NO_X$ zu Stickstoff katalysieren (Reduktionskatalysatoren). Ferner umfassen derartige Katalysatorsysteme spezifische Absorber für ausgewählte Abgaskomponenten - genannt seien hier beispielsweise HC- oder $NO_X$-Speicher

Aus der Druckschrift DE 197 53 842 A1 ist ein Verfahren zur Aufheizung eines Abgaskatalysators einer Brennkraftmaschine bekannt, wobei eine dem Katalysator zugefügte Energiemenge in Abhängigkeit eines gemessenen oder modellierten Abgasmassenstroms sowie einer gemessenen oder modellierten Ist-Temperatur (Abgastemperatur stromaufwärts des Vorkatalysators) ermittelt wird. Übersteigt die so berechnete Energiemenge einen vorgegebenen Schwellenwert (entsprechend einem Soll-Energieeintrag), so wird die Aufheizmaßnahme deaktiviert. Als Heizmaßnahme wird die Zufuhr von Sekundärluft in Abgasanlage beschreibt.

Zum optimalen Betrieb der genannten Komponenten der Abgasreinigungsanlage müssen insbesondere Betriebsparameter wie eine Abgaszusammensetzung, ein Abgasmassenstrom und eine Temperatur überwacht und gegebenenfalls beeinflusst werden. Gerade letzterer Parameter hat sich beim Betrieb von Katalysatorsystemen als besonders wichtig herausgestellt, da eine katalytische Aktivität als auch ein Absorptionsverhalten der Speicherkomponenten stark temperaturabhängig ist. Zur Gewährung optimaler Funktionalität ist es daher notwendig, zumindest zeitweise die Temperatur im Bereich der Komponenten in ein gegebenes Temperaturfenster einzuregeln. Dabei können für eine einzelne Komponente der Abgasreinigungsanlage auch mehrere Temperaturfenster vorgesehen sein, deren Ansteuerung jeweils von den gerade vorliegenden Betriebsbedingungen abhängig ist. So lassen sich beispielsweise für einen $NO_X$-Speicherkatalysator Temperaturfenster für eine Entschwefelung, eine $NO_X$-Regenration oder einen Homogenbetrieb vorgeben.

Häufig sind die im Abgasstrang herrschenden Temperaturen nicht ausreichend, um ein für die Betriebssituation optimales Ergebnis zu erreichen. Es ist daher bekannt, Heizmaßnahmen einzuleiten. So kann beispielsweise durch eine gezielte Wirkungsgradminderung des Verbrennungsablaufes im Motor - zum Beispiel durch eine Spätzündung - die Temperatur erhöht werden. Dies führt zu einer überwiegend oder ausschließlich thermischen Aufheizung des Abgases und nachfolgend der Komponenten der Abgasreinigungsanlage.

Weiterhin ist es bekannt, eine Nacheinspritzung während oder nach Brennende in Phasen eines Magerbetriebes der Brennkraftmaschine durchzuführen. Zwar bleiben bei einer solchen Vorgehensweise die Abgastemperaturen annähernd gleich, jedoch wird durch die Anhebung der Schadstoffemissionen und deren katalytische Umsetzung auf den Katalysatoren eine Erhitzung derselben ermöglicht. Nachteilig an dem bekannten Verfahren ist es, dass die Regelung der Temperatur im bisherigen Verfahren lediglich derart erfolgt, dass eine Ist- mit einer Soll-Temperatur verglichen wird und die Heizmaßnahme so lange aufrechterhalten wird, bis die Soll-Temperatur erreicht ist. Dies führt jedoch häufig zu einer unerwünschten Überhitzung der Abgasreinigungsanlage. Weiterhin ist nachteilig, dass die Nacheinspritzung im Magerbetrieb der Brennkraftmaschine zwar eine gute HC- und CO-Umsetzung jedoch nur eine unzureichend niedrige $NO_X$-Umsetzung ermöglicht. Unter dem Gesichtspunkt sich verschärfender Vorschriften hinsichtlich tolerierbarer Abgasgrenzwerte besteht demnach Handlungsbedarf, um die an sich energetisch günstige Nacheinspritzung weiterhin als Heizmaßnahme nutzen zu können.

Aufgabe der vorliegenden Erfindung ist es, eine Vorrichtung und ein Verfahren zur Steuerung der Heizmaßnahme in der Abgasreinigungsanlage zur Verfügung zu stellen, mit dem die geschilderten Nachteile des Standes der Technik überwunden werden können. Insbesondere soll auch die Nacheinspritzung möglichst emissionsneutral durchgeführt werden.

Erfindungsgemäß wird diese Aufgabe durch das Verfahren zur Steuerung der Heizmaßnahme in der Abgasreinigungsanlage der Brennkraftmaschine mit den im Anspruch 1 genannten Merkmalen sowie der dazu notwendigen Vorrichtung mit den im Anspruch 16 genannten Merkmalen gelöst. Nach dem Verfahren werden

(a) ein Abgasmassenstrom durch die Abgasreinigungsanlage gemessen oder modelliert,

(b) eine Ist-Temperatur in ausgewählten Bereichen der Abgasreinigungsanlage gemessen oder modelliert und mit einer Soll-Temperatur verglichen (Temperaturdifferenz),

(c) in Abhängigkeit von der Temperaturdifferenz und dem Abgasmassenstrom ein Soll-Energieeintrag in die Abgasreinigungsanlage ermittelt,

(d) die Heizmaßnahme charakterisierende Parameter derart festgelegt und vorgegeben, dass die Heizmaßnahme zumindest näherungsweise den Soll-Energieeintrag liefert und

(e) der Solleintrag in Abhängigkeit von der Abgaszusammensetzung geregelt wird.

Ein Umfang der Heizmaßnahme orientiert sich damit erstmalig an dem tatsächlich notwendigen Soll-Energieeintrag zur Erreichung der Soll-Temperatur und damit wird ein Überhitzen der Abgasreinigungsanlage und ihrer Komponenten verhindert.

Die Vorrichtung umfasst dazu Mittel, mit denen die vorgenannten Verfahrensschritte durchführbar sind. Diese Mittel umfassen vorzugsweise eine Sensorik zur Erfassung von Temperaturen und/oder Abgaszusammensetzung und/oder Abgaskomponenten an ausgewählten Messpunkten der Abgasreinigungsanlage. So sind insbesondere bevorzugt Lambdasonden, Temperaturfühler und messgasspezifische Sensoren, die in an sich bekannter Weise im Abgasstrang der Brennkraftmaschine angeordnet sind. Die Abgasreinigungsanlage umfasst vorzugsweise Partikelfilter und/oder ein Katalysatorsystem, welches insbesondere einen $NO_X$-Speicherkatalysator beinhaltet.

Weiterhin umfassen diese Mittel vorzugsweise ein Einspritzsystem der Brennkraftmaschine, mit den insbesondere die Nacheinspritzung regelbar durchführbar ist. Darüber hinaus beinhaltet die Vorrichtung ein Steuergerät, in dem eine Prozedur zur Regelung der Heizmaßnahme in digitalisierter Form hinterlegt ist. Das Steuergerät kann als selbstständige Recheneinheit realisiert werden oder aber auch in ein zumeist vorhandenes Motorsteuergerät integriert werden.

In einer bevorzugten Ausgestaltung des Verfahrens wird als Heizmaßnahme die Nacheinspritzung von Kraftstoff in die Brennkraftmaschine eingeleitet. Dazu wird vorzugsweise zunächst eine Einspritzmenge für die Heizmaßnahme berechnet. Es hat sich dabei als vorteilhaft erwiesen, die Einspritzmenge auf einen maximalen Grenzwert zu beschränken, wobei der Grenzwert derart zu wählen ist, dass eine thermische Schädigung der Komponenten der Abgasreinigungsanlage infolge der Heizmaßnahme verhindert wird.

In einer weiteren bevorzugten Ausgestaltung des letztgenannten Verfahrens wird eine Anzahl an Zylindern, in denen die Nacheinspritzung erfolgen soll, nach bestimmten Kriterien festgelegt. Die Anzahl der Zylinder ist zunächst kleiner oder gleich einer Gesamtanzahl an Zylindern der Brennkraftmaschine. Sie muss ferner eine Mindestanzahl an Zylindern, in denen die Nacheinspritzung erfolgen soll, übersteigen. Die Mindestanzahl kann jeweils betriebsspezifisch angepasst werden oder aber auch vorgegeben werden und beträgt zumindest 1.

Weiterhin ist im Falle der Nacheinspritzung bevorzugt, dass für jeden Zylinder, in dem die Nacheinspritzung erfolgen soll, eine Gesamteinspritzmenge berechnet wird, die über den Zylinder während der Nacheinspritzung injiziert werden soll Es hat sich dabei als vorteilhaft erwiesen, die Einspritzmenge als Funktion einer Einspritzdauer zu berücksichtigen.

In einer weiteren bevorzugten Ausbildung des vorgenannten Verfahrens wird die Nacheinspritzung derart beeinflusst, dass

(a) die Einspritzdauer zunächst über alle Zylinder, in denen die Nacheinspritzung erfolgen soll, berechnet wird (vorläufige Einspritzdauer pro Zylinder) und

(b) die Anzahl der Zylinder, in denen die Nacheinspritzung erfolgen soll, solange gemindert wird, bis die vorläufige Einspritzdauer in den verbleibenden Zylindern eine vorgegebene Mindestdauer übersteigt.

Eine solche Vorgehensweise hat den Vorteil, dass durch entsprechende Festlegung der Mindestdauer die Nacheinspritzung mit der notwendigen Präzision außerhalb eines ballistischen Bereichs durchgeführt werden kann. Vorzugsweise wird ein Sicherheitsabstand zum ballistischen Bereich von mindestens 10 %, insbesondere mindestens 20 %, bei der Festlegung der Einspritzparameter berücksichtigt.

Alternativ oder in Kombination zu letztgenannter Vorgehensweise kann nach einer weiteren bevorzugten Ausgestaltungsvariante des Verfahrens

(a) die Anzahl der Arbeitsspiele pro Einspritzzeitpunkt zunächst auf a = 1 gesetzt werden und

(b) die Anzahl der Arbeitsspiele a auf a ≥ 2 erhöht werden, bis die vorläufige Einspritzdauer die vorgegebene Mindestdauer übersteigt.

Auch durch diese Maßnahme wird demnach die Einspritzdauer der Nacheinspritzung solange verlängert, bis sie außerhalb des ballistischen Bereichs liegt.

Ferner ist bevorzugt, dass anhand einer gewünschten Gemischzusammensetzung (Lambdawert) ein Luftbedarf für die Nacheinspritzung berechnet wird. Dies eröffnet insbesondere die Möglichkeit, die Nacheinspritzung weitgehend momentenneutral durchzuführen. Es wird demnach eine Auswirkung der Nacheinspritzung auf das Moment durch eine an sich bekannte Beeinflussung der Einspritzparameter während des gesamten Verbrennungsvorganges im Zylinder kompensiert.

Des weiteren ist bevorzugt, dass die Einspritzmenge während der Nacheinspritzung in Abhängigkeit von einem gewünschten Lambdawert in der Abgasreinigungsanlage festgelegt wird. Die Heizmaßnahme kann auf diese Weise auch kontrolliert unter stöchiometrischen oder fetten Betriebsbedingungen der Brennkraftmaschine durchgeführt werden. Zur Gewährung größtmöglicher Emissionsminderung kann bei Betrieb unter fetten Bedingungen das Abgas vor dem Katalysatorsystem auf $\lambda \approx 1$ durch Einspeisung von Luft mittels einer Sekundärluftpumpe eingeregelt werden.

Weitere vorteilhafte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:

Figur 1     eine schematische Darstellung einer Brennkraftmaschine mit einer Abgasreinigungsanlage;

Figur 2     ein Ablaufdiagramm zur Steuerung einer Heizmaßnahme, gegliedert in 10 Teilschritten;

Figur 3     einen detaillierten Teilausschnitt des Ablaufdiagramms gemäß Figur 2 im Bereich des Schrittes 3 und

Figur 4     einen detaillierten Teilausschnitt des Ablaufdiagramms gemäß Figur 2 in den Teilschritten 4 bis 6.

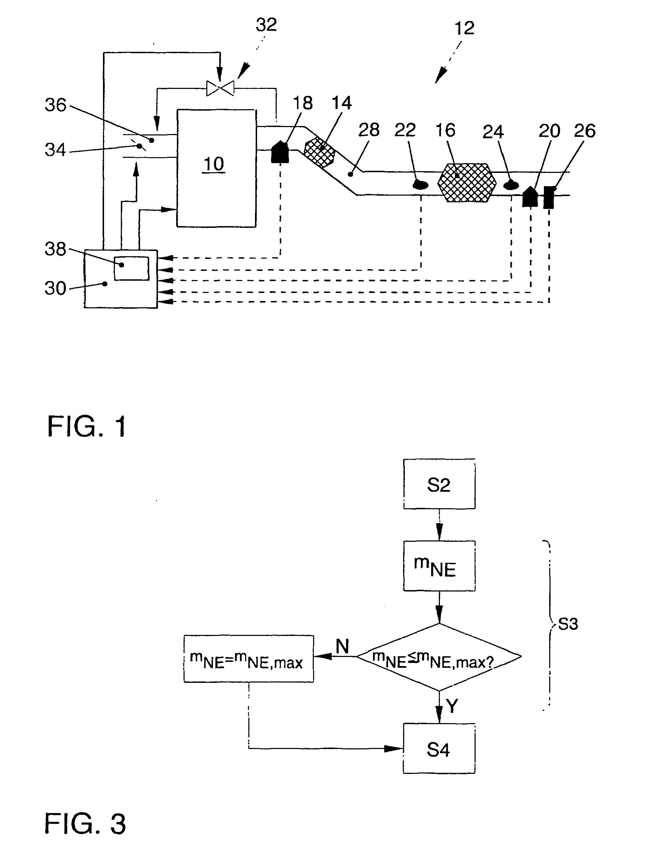

Die Figur 1 offenbart eine schematische Ansicht einer Brennkraftmaschine 10 mit einer Abgasreinigungsanlage 12. Die Abgasreinigungsanlage 12 umfasst ein Katalysatorsystem, das aus einem Vorkatalysator 14 sowie einem $NO_X$-Speicherkatalysator 16 besteht. Beide Katalysatoren 14, 16 ermöglichen eine weitestgehende Emissionsreduktion im stöchiometrischen Betrieb, das heißt, sie beinhalten Katalysatorkomponenten, die einerseits eine Oxidation von Kohlenmonoxid CO und unvollständig verbrannten Kohlenwasserstoffen HC und andererseits eine Reduktion von Stickoxiden $NO_X$ begünstigen. Der $NO_X$-Speicherkatalysator 16 besitzt ferner ein Speichermedium für $NO_X$, das heißt, er ermöglicht eine Einlagerung von $NO_X$ in Phasen eines mageren Betriebes der Brennkraftmaschine 10. Aufbau und Verfahren zum Betrieb der Katalysatoren 14, 16 sind bekannt und werden daher an dieser Stelle nicht näher erläutert.

Die Abgasreinigungsanlage 12 umfasst ferner eine Sensorik, die es ermöglicht, Temperaturen, Abgaszusammensetzungen und einzelne Abgaskomponenten an ausgewählten Messpunkten zu erfassen. Dazu dienen beispielsweise die Lambdasonden 18, 20 sowie die Temperaturfühler 22, 24 und ein $NO_X$-Sensor 26. Mit Hilfe geeigneter Modelle - die zumeist auf den von der Sensorik bereitgestellten Signalen basieren - lassen sich auch in anderen Teilbereichen eines Abgasstranges 28 der Brennkraftmaschine 10 die geschilderten Betriebsparameter berechnen. Derartige Modelle lassen sich dem Stand der Technik entnehmen.

Weiterhin ist der Brennkraftmaschine 10 ein Motorsteuergerät 30 zugeordnet. In das Motorsteuergerät 30 werden die Signale der Sensorik und weitere Parameter der Brennkraftmaschine 10 eingelesen. Anhand der Signale und dort hinterlegter Prozeduren kann eine Steuerung des Betriebs der Brennkraftmaschine 10 erfolgen. So kann beispielsweise eine Gemischzusammensetzung durch Regelung einer Abgasrückführrate einer Abgasrückführeinrichtung 32 und/oder einer Drosselklappe 34 in einem Ansaugrohr 36 der Brennkraftmaschine 10 erfolgen. Ferner können durch ein hier nicht differenziert dargestelltes und in die Brennkraftmaschine 10 integriertes Einspritzsystem Einspritzmengen, Einspritzdauer und Zündwinkel während der Verbrennung beeinflusst werden. Auch die genannten Maßnahmen sind hinlänglich aus dem Stand der Technik bekannt.

Ferner ist der Brennkraftmaschine 10 ein Steuergerät 38 zugeordnet, das als selbstständige Einheit realisiert werden kann oder aber auch - wie hier dargestellt - in das Motorsteuergerät 30 integriert ist. Das Steuergerät 38 beinhaltet eine Prozedur zur Steuerung einer Heizmaßnahme im Bereich der Abgasreinigungsanlage 12.

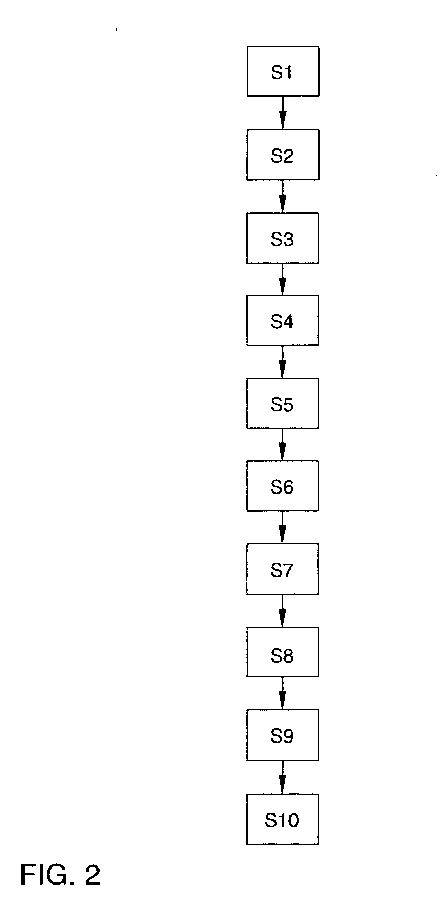

In der Figur 2 ist ein schematisches Ablaufdiagramm zur Steuerung der Heizmaßnahmen dargestellt. Die Heizmaßnahme beinhaltet hier eine Nacheinspritzung, da sich diese Maßnahme als energetisch besonders günstig erwiesen hat. Das aufgezeigte Verfahren ist jedoch nicht nur auf diese Heizmaßnahme beschränkt, sondern es können auch andere Heizmaßnahmen in Kombination oder separat hiervon ergriffen werden. Entscheidend ist lediglich, dass die die Heizmaßnahme charakterisierenden Parameter derart festgelegt und vorgegeben werden, dass die Heizmaßnahmen einen noch näher erläuterten Soll-Energieeintrag liefern.

Zunächst werden in einem Schritt S1 die Katalysatortemperaturen der Katalysatoren 14, 16 bestimmt. Dazu kann unter anderem auf ein Signal der Temperaturfühler 22, 24 zurückgegriffen werden. In Kombination dazu sind Modelle bekannt, mit denen sich die Temperaturen der Katalysatoren 14, 16 berechnen lassen. Nach Vorliegen der Ist-Temperaturen werden diese mit den gewünschten Soll-Temperaturen verglichen und liefern eine Temperaturdifferenz. Die Soll-Temperaturen sind dabei derart auszuwählen, dass sie in einem gewünschten Temperaturfenster für die jeweils notwendige Betriebssituation der Abgasreinigungsanlage 12 liegen. So ist beispielsweise eine relativ hohe Soll-Temperatur im Bereich des $NO_X$-Speicherkatalysators 16 notwendig, wenn dieser entschwefelt werden soll. Andererseits ist in Phasen "normaler Betriebsführung" eine deutlich niedrigere Temperatur notwendig, um hinreichend hohe katalytische Aktivität beziehungsweise ein hinreichend hohes $NO_X$-Speichervermögen zu gewährleisten.

In einem Schritt S2 wird in Abhängigkeit von der Temperaturdifferenz und einem modellierten oder gemessenen Abgasmassenstrom der Soll-Energieeintrag in die Abgasreinigungsanlage 12 ermittelt. Bei bekanntem Heizwert des verwendeten Kraftstoffs kann dann eine Einspritzmenge $m_{NE}$ für die Nacheinspritzung berechnet werden. Die Einspritzmenge $m_{NE}$ wird in einem Schritt S3 auf einen maximalen Grenzwert $m_{NE,max}$ beschränkt. Der Grenzwert $m_{NE,max}$ dient insbesondere dazu, eine partielle Überhitzung der Katalysatoren 14, 16 und eine nach sich ziehende thermische Schädigung der selben zu verhindern. Selbstverständlich ist der maximale Grenzwert $m_{NE,max}$ abhängig von der Katalysatorausführung, das heißt deren Lage, Trägerausführung, Größe, Volumen, Zellenzahl, Wandstärke und Beschichtung.

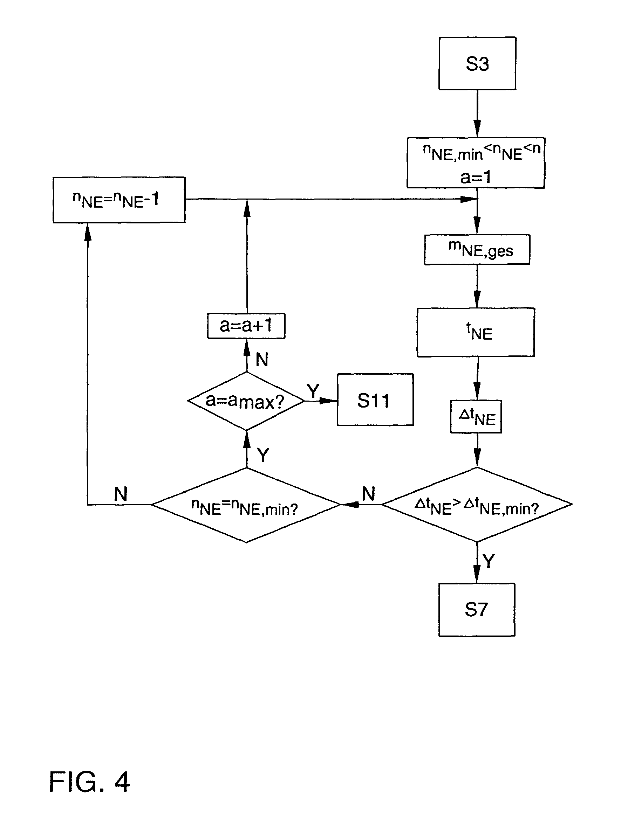

Der Figur 3 ist eine detaillierte Darstellung der Vorgehensweise während des Schrittes S3 zu entnehmen. Zunächst wird demnach die Einspritzmenge $m_{NE}$ ermittelt und nachfolgend in ihrer Größe mit dem Grenzwert $m_{NE,max}$ verglichen. Ist die Einspritzmenge $m_{NE}$ größer als der Grenzwert $m_{NE,max}$ so wird die Einspritzmenge $m_{NE}$ auf den Grenzwert $m_{NE,max}$ beschränkt.

Nachdem die Einspritzmenge $m_{NE}$ ermittelt wurde, werden in einem Schritt S4 die Einspritzparameter - nämlich eine vorläufige Einspritzdauer der Nacheinspritzung sowie die Einspritzmenge und der Zündzeitpunkt der Haupteinspritzung - berechnet. Die Einspritzmenge $m_{NE}$ kann bei konstantem Kraftstoffeintrag während der Nacheinspritzung durch die Einspritzdauer $\Delta t_{NE}$ ersetzt werden.

Um zu verhindern, dass bei kleineren Energieeinträgen die Injektoren mit so geringen Einspritzdauern $\Delta t_{NE}$ beaufschlagt werden, dass sie im unpräzisen ballistischen Bereich arbeiten, wird in einem Schritt S5 die Notwendigkeit geprüft, bei einem n-Zylindermotor die Nacheinspritzung nur auf 1 bis n-1 Zylindern, vorzugsweise $n/2$ Zylindern, durchzuführen. Damit verlängert sich die Einspritzdauer $\Delta t_{NE}$ der verbleibenden nacheinspritzenden Zylinder. Liegt die Einspritzeit $\Delta t_{NE}$ auch dann nahe am ballistischen Bereich, wenn nur auf einem Zylinder die Nacheinspritzung durchgeführt wird, erfolgt die Nacheinspritzung auf diesen einen Zylinder in jeden a-ten Arbeitsspiel des Motors mit a $\geq 2$. Dabei muss die Nacheinspritzung von Arbeitsspiel zu Arbeitsspiel nicht notwendigerweise auf immer dem- beziehungsweise denselben Zylindern ablaufen. Die gesamte Entscheidungsstrategie berücksichtigt ein Sicherheitsabstand zum ballistischen Bereich von mindestens 10 %, vorzugsweise mindestens 20 %.

In einem Schritt S6 lassen sich somit die Anzahl der nacheinspritzenden Zylinder sowie der Spritzbeginn der Nacheinspritzung, die vorläufige Nacheinspritzdauer und damit die vorläufige Nacheinspritzmenge festlegen.

Der Figur 4 ist zur Verdeutlichung noch einmal das Vorgehen in den Schritten S4 bis S6 in einer leicht abweichenden Weise zu entnehmen. Dem Schritt S3 folgend, wird zunächst eine Anzahl $n_{NE}$ an Zylindern, in denen die Nacheinspritzung erfolgen soll, festgelegt. Die Anzahl $n_{NE}$ ist dabei kleiner oder gleich einer Gesamtanzahl n an Zylindern der Brennkraftmaschine 10. Sie übersteigt aber eine vorgebbare Mindestanzahl $n_{NE,min}$. Die Mindestanzahl $n_{NE,min}$ ist $\geq 1$ und kann motor- oder betriebsspezifisch festgelegt werden. Ohne an dieser Stelle bereits näher hierauf einzugehen, wird die Anzahl a der Arbeitsspiele pro Einspritzzeitpunkt $t_{NE}$ zunächst auf a = 1 gesetzt.

Nachfolgend wird für jeden $n_{NE}$-ten Zylinder eine Gesamteinspritzmenge $m_{NE,ges}$ berechnet. Die Gesamteinspritzmenge $m_{NE,ges}$ stellt die Menge dar, die über diesen Zylinder während der Nacheinspritzung injiziert werden soll. Ferner wird anhand von Motordrehzahl sowie Zündzeitpunkt und Haupteinspritzmenge ein Zeitpunkt des Beginns der Nacheinspritzung $t_{NE}$, bestimmt, der sicher hinter dem Brennende der Haupteinspritzung liegt.

Die Gesamteinspritzmenge $m_{NE,ges}$ lässt sich in einfacher Weise als Funktion der Einspritzdauer $\Delta t_{NE}$ darstellen, sofern der Kraftstoffdruck während der Nacheinspritzung weitestgehend konstant ist. Die Einspritzdauer $\Delta t_{NE}$ zu Beginn der geschilderten Routine entspricht demnach der vorläufigen Einspritzdauer pro Zylinder an den $n_{NE}$ Zylindern der Brennkraftmaschine 10.

Ergibt eine sich anschließende Abfrage, dass die Einspritzdauer $\Delta t_{NE}$ eine Mindestdauer $\Delta t_{NE,min}$ übersteigt, so schließt sich ein noch näher zu erläuternder Schritt S7 an. Anderenfalls wird in einer weiteren Abfrage zunächst ermittelt, ob die Anzahl $n_{NE}$ der Zylinder, in denen die Nacheinspritzung erfolgen soll, bereits eine Mindestanzahl $n_{NE.min}$ erreicht hat. Ist dies nicht der Fall, wird die Anzahl $n_{NE}$ um 1 gemindert. Ist bereits die Mindestanzahl $n_{NE,min}$ erreicht, so wird versucht, die Einspritzdauer $\Delta t_{NE}$ durch Beeinflussung der Anzahl a der Arbeitsspiele der Brennkraftmaschine 10 pro Einspritzzeitpunkt $t_{NE}$ zu verlängern. Dazu wird die Anzahl a um 1 erhöht, wenn nicht bereits eine maximale Anzahl $a_{max}$ an Arbeitsspielen vorliegt. Sollte dies der Fall sein, so erfolgt in einem Schritt S11 ein Abbruch der Routine und die erforderliche Heizmaßnahme muss auf andere Art und Weise durchgeführt werden.

Nachdem die Parameter der Nacheinspritzung bekannt sind, wird im Schritt S7 ein Luftmassenstrom für die Nacheinspritzung und auch für die Haupteinspritzung berechnet. Damit lässt sich eine Gemischzusammensetzung definieren als Verhältnis der Luftmassenströme für Haupt- und Nacheinspritzung bezogen auf die Haupteinspritzmenge.

In einem Schritt S8 wird zunächst ein Zündzeitpunkt für den Motorbetrieb unter mageren Bedingungen bestimmt. Für die Nacheinspritzung im Zylinder folgt eine Momentenkorrektur durch eine Zündwinkeländerung, die die eventuell anfallende Leistungsabgabe der Nacheinspritzung sowie eine Verdampfung der vorläufig nacheingespritzten Kraftstoffmenge berücksichtigt.

In einem Schritt S9 wird die Haupteinspritzung unter Berücksichtigung des Zündzeitpunktes aus Schritt S8 durchgeführt. Gegebenenfalls kann dann in einem Schritt S10 die vorläufige Nacheinspritzmenge abhängig von einer Abweichung der über die Lambdasonden 18, 20 gemessenen Abgaswerte vom vorgegebenen Soll-Wert korrigiert werden, in dem die Einspritzzeitpunkte $t_{NE}$ neu festgelegt werden. Wegen der vorher durchgeführten Berechnung der vorläufigen Nacheinspritzung ist mit kleinen Abweichungen zur tatsächlichen Einspritzmenge zu rechnen. Damit werden die vorstehend beschriebenen Sicherheitsabstände zum ballistischen Bereich nicht überschritten und der Fehler in der Momentenkorrektur im Schritt S8 liegt unterhalb einer Störbarkeitsschwelle.

**BEZUGSZEICHENLISTE**

| | |
|---|---|
| 10 | Brennkraftmaschine |
| 12 | Abgasreinigungsanlage |
| 14 | Vorkatalysator |
| 16 | $NO_x$-Speicherkatalysator |
| 18 | Lambdasonde |
| 20 | Lambdasonde |
| 22 | Temperaturfühler |
| 24 | Temperaturfühler |
| 26 | $NO_x$-Sensor |
| 28 | Abgasstrang |
| 30 | Motorsteuergerät |
| 32 | Abgasrückführeinrichtung |
| 34 | Drosselklappe |
| 36 | Ansaugrohr |
| 38 | Steuergerät |
| a | Anzahl der Arbeitsspiele der Brennkraftmaschine pro Einspritzzeitpunkt $t_{NE}$ |
| $a_{max}$ | maximale Anzahl an Arbeitsspielen |
| $m_{NE}$ | Einspritzmenge der Nacheinspritzung |
| $m_{NE,max}$ | maximale Einspritzmenge |
| $m_{NE,ges}$ | Gesamteinspritzmenge der Nacheinspritzung |
| n | Anzahl der Zylinder |
| $n_{NE}$ | Anzahl der Zylinder mit Nacheinspritzung |
| $n_{NE,min}$ | Mindestanzahl der Zylinder mit Nacheinspritzung |
| $t_{NE}$ | Zeitpunkt des Beginns der Nacheinspritzung |
| $\Delta t_{NE}$ | Einspritzdauer der Nacheinspritzung |
| $\Delta t_{NE,min}$ | Mindesteinspritzdauer der Nacheinspritzung |

**Patentansprüche**

1. Verfahren zur Steuerung einer Heizmaßnahme in einer Abgasreinigungsanlage von Brennkraftmaschinen (10), bei dem

> (a) ein Abgasmassenstrom durch die Abgasreinigungsanlage (12) gemessen oder modelliert wird,
> (b) eine Ist-Temperatur in ausgewählten Bereichen der Abgasreinigungsanlage (12) gemessen oder modelliert wird und durch Vergleich mit einer Soll-Temperatur eine Temperaturdifferenz gebildet wird,
> (c) in Abhängigkeit von der Temperaturdifferenz und dem Abgasmassenstrom ein Soll-Energieeintrag in die Abgasreinigungsanlage (12) ermittelt wird und
> (d) die Heizmaßnahme charakterisierende Parameter derart festgelegt und vorgegeben werden, dass die Heizmaßnahme zumindest näherungsweise den Soll-Energieeintrag liefert,

wobei
die Heizmaßnahme eine Nacheinspritzung von Kraftstoff in die Brennkraftmaschine (10) nach Brennende der Haupteinspritzung durch ein Einspritzsystem umfasst und

- eine Anzahl ($n_{NE}$) von Zylindern der Brennkraftmaschine (10), in denen die Nacheinspritzung erfolgen soll, und/oder
- eine Anzahl (a) von Arbeitsspielen, in denen die Nacheinspritzung erfolgen soll, derart festgelegt wird, dass eine Einspritzdauer ($\Delta t_{NE}$) der Nacheinspritzung eine vorgegebene Mindestdauer ($\Delta t_{NE,min}$) übersteigt.

2. Verfahren nach Anspruch 1, **dadurch gekennzeichnet, dass** eine Einspritzmenge ($m_{NE}$) für die Nacheinspritzung berechnet wird.

3. Verfahren nach Anspruch 2 **dadurch gekennzeichnet, dass** die Einspritzmenge ($m_{NE}$) auf einen maximalen Grenzwert ($m_{NE,max}$) beschränkt wird, wobei der Grenzwert ($m_{NE,max}$) derart gewählt wird, dass eine thermische Schädigung der Komponenten der Abgasreinigungsanlage (12) infolge der Heizmaßnahme verhindert wird.

4. Verfahren nach einem der vorhergehenden Ansprüche, **dadurch gekennzeichnet, dass** für die Anzahl ($n_{NE}$) von Zylindern, in denen die Nacheinspritzung erfolgen soll, gilt:

$$n_{NE,min} \leq n_{NE} \leq n, \text{ insbesondere } n_{NE,min} \leq n_{NE} \leq n\text{-}1,$$

wobei n eine Gesamtanzahl der Zylinder der Brennkraftmaschine (10) ist und $n_{NE,min}$ eine Mindestanzahl von Zylindern, in denen die Nacheinspritzung erfolgen soll, mit $n_{NE,min} \geq 1$.

5. Verfahren nach einem der vorhergehenden Ansprüche, **dadurch gekennzeichnet, dass** für jeden $n_{NE}$-ten Zylinder, in dem die Nacheinspritzung erfolgen soll, eine Gesamteinspritzmenge ($m_{NE,ges}$) berechnet wird, die über diesen Zylinder während der Nacheinspritzung injiziert werden soll.

6. Verfahren nach Anspruch 5, **dadurch gekennzeichnet, dass** die Gesamteinspritzmenge ($m_{NE,ges}$) als Funktion der Nacheinspritzdauer ($\Delta t_{NE}$) berücksichtigt wird.

7. Verfahren nach Anspruch 6, **dadurch gekennzeichnet, dass**

(a) die Nacheinspritzdauer ($\Delta t_{NE}$) zunächst über alle $n_{NE}$-Zylinder der Brennkraftmaschine (10) als vorläufige Einspritzdauer pro Zylinder berechnet wird und
(b) die Anzahl ($n_{NE}$) der Zylinder solange gemindert wird, bis die vorläufige Einspritzdauer der verbleibenden $n_{NE}$-Zylinder, in denen die Nacheinspritzung erfolgen soll, die vorgegebene Mindestdauer ($\Delta t_{NE,min}$) übersteigt.

8. Verfahren nach einem der Ansprüche 5 bis 7, **dadurch gekennzeichnet, dass**

(a) die Anzahl (a) der Arbeitsspiele pro Einspritzzeitpunkt ($t_{NE}$), in denen die Nacheinspritzung erfolgen soll, zunächst auf a = 1 gesetzt wird und
(b) die Anzahl (a) der Arbeitsspiele auf a $\geq$ 2 solange erhöht wird, bis die vorläufige Nacheinspritzdauer ($\Delta t_{NE}$) die vorgegebene Mindestdauer ($\Delta t_{NE,min}$) übersteigt.

9. Verfahren nach einem der Ansprüche 5 bis 8, **dadurch gekennzeichnet, dass** anhand einer gewünschten Gemischzusammensetzung (Lambdawert) zum Umsetzen der Gesamteinspritzmenge ($m_{NE,ges}$) ein Luftmassenstrom für Nacheinspritzung berechnet wird.

10. Verfahren nach Anspruch 9, **dadurch gekennzeichnet, dass** ein Zündzeitpunkt so gewählt wird, dass die Nacheinspritzung weitestgehend momentenneutral durchgeführt wird.

11. Verfahren nach einem der vorhergehenden Ansprüche, **dadurch gekennzeichnet, dass** als Heizmaßnahme die Nacheinspritzmenge ($m_{NE}$) in Abhängigkeit von einem vorgebbaren Lambdawert in der Abgasreinigungsanlage (12) festgelegt wird.

12. Verfahren nach einem der vorhergehenden Ansprüche, **dadurch gekennzeichnet, dass** die Nacheinspritzmenge ($m_{NE}$) in Abhängigkeit von der Abweichung des vorgebbaren Lambdawertes in der Abgasreinigungsanlage (12) vom gemessenen Lambdawert in der Abgasreinigungsanlage (12) geregelt wird.

**13.** Verfahren nach Anspruch 11 oder 12, **dadurch gekennzeichnet, dass** die Heizmaßnahme unter stöchiometrischen oder fetten Betriebsbedingungen der Brennkraftmaschine (10) durchgeführt wird.

**14.** Verfahren nach Anspruch 13, **dadurch gekennzeichnet, dass** unter fetten Bedingungen das Abgas von dem Katalysatorsystem auf $\lambda \approx 1$ durch Einspeisung von Luft mittels einer Sekundärluftpumpe eingeregelt wird.

**15.** Vorrichtung zur Steuerung einer Heizmaßnahme in einer Abgasreinigungsanlage von Brennkraftmaschinen (10), bei der Mittel vorhanden sind, mit denen

(a) ein Abgasmassenstrom durch die Abgasreinigungsanlage (12) gemessen oder modelliert wird,
(b) eine Ist-Temperatur in ausgewählten Bereichen der Abgasreinigungsanlage (12) gemessen oder modelliert wird und durch Vergleich mit einer Soll-Temperatur eine Temperaturdifferenz gebildet wird,
(c) in Abhängigkeit von der Temperaturdifferenz und dem Abgasmassenstrom ein Soll-Energieeintrag in die Abgasreinigungsanlage (12) ermittelt wird und
(d) die Heizmaßnahme charakterisierende Parameter derart festgelegt und vorgegeben werden, dass die Heizmaßnahme den Soll-Energieeintrag liefert,

wobei
die Heizmaßnahme eine Nacheinspritzung von Kraftstoff in die Brennkraftmaschine (10) nach Brennende der Haupteinspritzung durch ein Einspritzsystem umfasst und

- eine Anzahl ($n_{NE}$) von Zylindern der Brennkraftmaschine (10), in denen die Nacheinspritzung erfolgen soll, und/oder
- eine Anzahl (a) von Arbeitsspielen, in denen die Nacheinspritzung erfolgen soll,

derart festgelegt wird, dass eine Einspritzdauer ($\Delta t_{NE}$) der Nacheinspritzung eine vorgegebene Mindestdauer ($\Delta t_{NE,min}$) übersteigt.

**16.** Vorrichtung nach Anspruch 15, **dadurch gekennzeichnet, dass** die Abgasreinigungsanlage (12) Partikelfilter und/ oder ein Katalysatorsystem, insbesondere einen $NO_x$-Speicherkatalysator (16), umfasst.

**17.** Vorrichtung nach den Ansprüchen 15 oder 16, **dadurch gekennzeichnet, dass** der Abgasreinigungsanlage (12) eine Sensorik zur Erfassung von Temperaturen und/oder von Abgaszusammensetzungen und/oder von Abgaskomponenten an ausgewählten Messpunkten zugeordnet ist.

**18.** Vorrichtung nach Anspruch 17, **dadurch gekennzeichnet, dass** die Sensorik Lambdasonden, Temperaturfühler und messgasspezifische Sensoren umfasst.

**19.** Vorrichtung nach einem der Ansprüche 15 bis 18, **dadurch gekennzeichnet, dass** die Vorrichtung ein Einspritzsystem der Brennkraftmaschine (10) umfasst.

**20.** Vorrichtung nach einem der Ansprüche 15 bis 19, **dadurch gekennzeichnet, dass** die Vorrichtung ein Steuergerät (38), in dem eine Prozedur zur Steuerung der Heizmaßnahme in digitalisierter Form hinterlegt ist, umfasst.

**21.** Vorrichtung nach Anspruch 20, **dadurch gekennzeichnet, dass** das Steuergerät (38) in ein Motorsteuergerät (30) integriert ist.

**Claims**

**1.** Method for controlling a heating action in an exhaust gas purification system for internal combustion engines (10), in which method

(a) an exhaust gas mass flow rate through the exhaust gas purification system (12) is measured or modelled,
(b) an actual temperature in selected regions of the exhaust gas purification system (12) is measured or modelled and a temperature difference is formed by means of comparison with a target temperature,
(c) a target energy input into the exhaust gas purification system (12) is determined as a function of the temperature difference and the exhaust gas mass flow rate,

(d) the parameters which characterize the heating action are fixed and predefined such that the heating action at least approximately provides the target energy input,

the heating action encompassing a post-injection of fuel into the internal combustion engine (10) after the end of combustion of the main injection by means of an injection system, and

- a number ($n_{NE}$) of cylinders of the internal combustion engine (100) in which the post-injection is to take place and/or
- a number (a) of working cycles in which the post-injection is to take place

being fixed such that an injection duration ($\Delta t_{NE}$) of the post-injection exceeds a predefined minimum duration ($\Delta t_{NE,min}$).

2.  Method according to Claim 1, **characterized in that** the injection quantity ($m_{NE}$) for the post-injection is calculated.

3.  Method according to Claim 2, **characterized in that** the injection quantity ($m_{NE}$) is restricted to a maximum limit value ($m_{NE,max}$), the limit value ($m_{NE,max}$) being selected so as to prevent thermal damage to the components of the exhaust gas purification system (12) as a result of the heating action.

4.  Method according to one of the preceding claims, **characterized in that**:

$$n_{NE,min} \leq n_{NE} \leq n, \text{ in particular } n_{NE,min} \leq n_{NE} \leq n-1$$

is true for the number ($n_{NE}$) of cylinders in which the post-injection is to take place, where n is the total number of cylinders of the internal combustion engine (10), and $n_{NE,min}$ is a minimum number of cylinders in which the post-injection is to take place, with $n_{NE,min} \geq 1$.

5.  Method according to one of the preceding claims,
    **characterized in that**, for each $n_{NE}$-th cylinder in which the post-injection is to take place, a total injection quantity ($m_{NE,ges}$) which is to be injected via said cylinder during the post-injection is calculated.

6.  Method according to Claim 5, **characterized in that** the total injection quantity ($m_{NE,ges}$) is incorporated as a function of the post-injection duration ($\Delta t_{NE}$).

7.  Method according to Claim 6, **characterized in that**

    (a) the post-injection duration ($\Delta t_{NE}$) is initially calculated over all $n_{NE}$ cylinders of the internal combustion engine (10) as a provisional injection duration per cylinder and
    (b) the number ($n_{NE}$) of cylinders is reduced until the provisional injection duration of the remaining $n_{NE}$ cylinders in which the post-injection is to take place exceeds the predefined minimum duration ($\Delta t_{NE,min}$).

8.  Method according to one of Claims 5 to 7,
    **characterized in that**

    (a) the number (a) of working cycles per injection time ($t_{NE}$) in which the post-injection is to take place is initially set to a = 1, and
    (b) the number (a) of working cycles is increased to a $\geq$ 2 until the provisional post-injection duration ($\Delta t_{NE}$) exceeds the predefined minimum duration ($\Delta t_{NE,min}$).

9.  Method according to one of Claims 5 to 8,
    **characterized in that** an air mass flow rate for post-injection is calculated in terms of a desired mixture composition (lambda value) for converting the total injection quantity ($m_{NE,ges}$).

10. Method according to Claim 9, **characterized in that** an ignition time is selected such that the post-injection is carried out in a manner as torque-neutral as possible.

**11.** Method according to one of the preceding claims, **characterized in that**, as a heating action, the post-injection quantity ($m_{NE}$) is fixed as a function of a predefinable lambda value in the exhaust gas purification system (12).

**12.** Method according to one of the preceding claims, **characterized in that** the post-injection quantity ($m_{NE}$) is controlled in a closed-loop fashion as a function of the deviation of the predefinable lambda value in the exhaust gas purification system (12) from the measured lambda value in the exhaust gas purification system (12).

**13.** Method according to Claim 11 or 12, **characterized in that** the heating action is carried out under stoichiometric or rich operating conditions of the internal combustion engine (10).

**14.** Method according to Claim 13, **characterized in that**, under rich conditions, the exhaust gas from the catalytic converter system is adjusted with closed-loop control to $\lambda \approx 1$ by feeding in air by means of a secondary air pump.

**15.** Device for controlling a heating action in an exhaust gas purification system for internal combustion engines (10), in which device means are provided, with the aid of which

(a) an exhaust gas mass flow rate through the exhaust gas purification system (12) is measured or modelled,
(b) an actual temperature in selected regions of the exhaust gas purification system (12) is measured or modelled and a temperature difference is formed by means of comparison with a target temperature,
(c) a target energy input into the exhaust gas purification system (12) is determined as a function of the temperature difference and the exhaust gas mass flow rate,
(d) the parameters which characterize the heating action are fixed and predefined such that the heating action provides the target energy input,
the heating action encompassing a post-injection of fuel into the internal combustion engine (10) after the end of combustion of the main injection by means of an injection system, and
- a number ($n_{NE}$) of cylinders of the internal combustion engine (10) in which the post-injection is to take place and/or
- a number (a) of working cycles in which the post-injection is to take place

being fixed such that an injection duration ($\Delta t_{NE}$) of the post-injection exceeds a predefined minimum duration ($\Delta t_{NE,min}$).

**16.** Device according to Claim 15, **characterized in that** the exhaust gas purification system (12) comprises a particulate filter and/or a catalytic converter system, in particular an $NO_x$ storage catalytic converter (16).

**17.** Device according to Claims 15 or 16, **characterized in that** the exhaust gas purification system (12) is assigned a sensor arrangement for detecting temperatures and/or exhaust gas compositions and/or exhaust gas components at selected measurement points.

**18.** Device according to Claim 17, **characterized in that** the sensor arrangement comprises lambda probes, temperature sensors and sensors specific to the measurement gas.

**19.** Device according to one of Claims 15 to 18, **characterized in that** the device comprises an injection system of the internal combustion engine (10).

**20.** Device according to one of Claims 15 to 19, **characterized in that** the device comprises a control unit (38) in which a procedure for controlling the heating action is stored in digital form.

**21.** Device according to Claim 20, **characterized in that** the control unit (38) is integrated into an engine control unit (30).

**Revendications**

**1.** Procédé de commande d'une opération de chauffage dans une installation de purification des gaz d'échappement de moteurs à combustion interne (10), dans lequel

(a) un débit massique de gaz d'échappement est mesuré ou modélisé par l'installation de purification des gaz d'échappement (12),

(b) une température réelle est mesurée ou modélisée dans des régions sélectionnées de l'installation de purification des gaz d'échappement (12) et une différence de température est obtenue par comparaison avec une température de consigne,

(c) un apport d'énergie de consigne est déterminé dans l'installation de purification des gaz d'échappement (12) en fonction de la différence de température et du débit massique de gaz d'échappement et

(d) des paramètres caractérisant l'opération de chauffage sont établis et prédéfinis de telle sorte que l'opération de chauffage fournisse au moins approximativement l'apport d'énergie de consigne,

l'opération de chauffage comprenant une post-injection de carburant dans le moteur à combustion interne (10) après la fin de la combustion de l'injection principale par un système d'injection et

- un certain nombre ($n_{NE}$) de cylindres du moteur à combustion interne (10) dans lesquels la post-injection doit avoir lieu, et/ou

- un certain nombre (a) de plages de travail, dans lesquelles la post-injection doit avoir lieu, sont établies de telle sorte qu'une durée d'injection ($\Delta t_{NE}$) de la post-injection dépasse une durée minimale prédéfinie ($\Delta T_{NE, min}$).

2. Procédé selon la revendication 1, **caractérisé en ce que** l'on calcule une quantité d'injection ($m_{NE}$) pour la post-injection.

3. Procédé selon la revendication 2, **caractérisé en ce que** la quantité d'injection ($m_{NE}$) est limitée à une valeur limite maximale ($m_{NE, max}$), la valeur limite ($m_{NE, max}$) étant sélectionnée de telle sorte qu'un endommagement thermique des composants de l'installation de purification des gaz d'échappement (12) dû à l'opération de chauffage soit évité.

4. Procédé selon l'une quelconque des revendications précédentes, **caractérisé en ce que** pour le nombre ($n_{NE}$) de cylindres dans lesquels la post-injection doit avoir lieu, on a :

$$n_{NE,min} \leq n_{NE} \leq n, \text{ notamment } n_{NE,min} \leq n_{NE} \leq n-1,$$

n étant un nombre entier de cylindres du moteur à combustion interne (10) et $n_{NE,min}$ étant un nombre minimal de cylindres dans lesquels la post-injection doit avoir lieu, avec $n_{NE,min} \geq 1$.

5. Procédé selon l'une quelconque des revendications précédentes, **caractérisé en ce que** pour chaque $n_{NE}^{ième}$ cylindre dans lequel la post-injection doit avoir lieu, on calcule une quantité d'injection totale ($m_{NE, ges}$) qui doit être injectée dans ce cylindre pendant la post-injection.

6. Procédé selon la revendication 5, **caractérisé en ce que** la quantité d'injection totale ($m_{NE, ges}$) est considérée comme une fonction de la durée de la post-injection ($\Delta t_{NE}$).

7. Procédé selon la revendication 6, **caractérisé en ce que**

(a) la durée de la post-injection ($\Delta t_{NE}$) est d'abord calculée pour tous les $n_{NE}$ cylindres du moteur à combustion interne (10) sous forme de durée d'injection provisoire par cylindre et

(b) le nombre ($n_{NE}$) des cylindres est réduit jusqu'à ce que la durée d'injection provisoire des $n_{NE}$ cylindres restants, dans lesquels la post-injection doit avoir lieu, dépasse la durée minimale prédéfinie ($\Delta t_{NE, min}$).

8. Procédé selon l'une quelconque des revendications 5 à 7, **caractérisé en ce que**

(a) le nombre (a) des plages de travail par instant d'injection ($t_{NE}$), dans lesquelles la post-injection doit avoir lieu, est d'abord mis à a = 1, et

(b) le nombre (a) des plages de travail est augmenté à a $\geq$ 2 tant que la durée de la post-injection provisoire ($\Delta t_{NE}$) ne dépasse pas la durée minimale prédéfinie ($\Delta t_{NE, min}$).

9. Procédé selon l'une quelconque des revendications 5 à 8, **caractérisé en ce que** l'on calcule à l'aide d'une composition de mélange souhaitée (valeur lambda) pour la réaction de la quantité d'injection totale ($m_{NE, ges}$) un débit massique d'air pour la post-injection.

**10.** procédé selon la revendication 9, **caractérisé en ce que** l'on choisit un instant d'allumage de telle sorte que la post-injection s'effectue pour la majeure partie de manière neutre en termes de couple.

**11.** Procédé selon l'une quelconque des revendications précédentes, **caractérisé en ce que** l'on établit comme opération de chauffage la quantité de post-injection ($m_{NE}$) en fonction d'une valeur lambda prédéfinissable dans l'installation de purification des gaz d'échappement (12).

**12.** Procédé selon l'une quelconque des revendications précédentes, **caractérisé en ce que** la quantité de post-injection ($m_{NE}$) est régulée en fonction de l'écart de la valeur lambda prédéfinissable dans l'installation de purification des gaz d'échappement (12) de la valeur lambda mesurée dans l'installation de purification des gaz d'échappement (12).

**13.** Procédé selon la revendication 11 ou 12, **caractérisé en ce que** l'opération de chauffage est réalisée dans des conditions de fonctionnement stoechiométriques ou riches du moteur à combustion interne (10).

**14.** Procédé selon la revendication 13, **caractérisé en ce que** l'on ajuste, dans le cas de conditions riches, le gaz d'échappement du système de catalyseur à $\lambda \approx 1$ par injection d'air au moyen d'une pompe à air secondaire.

**15.** Dispositif de commande d'une opération de chauffage dans une installation de purification des gaz d'échappement de moteurs à combustion interne (10), dans lequel on prévoit des moyens avec lesquels :

(a) un débit massique de gaz d'échappement est mesuré ou modélisé par l'installation de purification des gaz d'échappement (12),
(b) une température réelle est mesurée ou modélisée dans des régions sélectionnées de l'installation de purification des gaz d'échappement (12) et une différence de température est obtenue par comparaison avec une température de consigne,
(c) un apport d'énergie de consigne est déterminé dans l'installation de purification des gaz d'échappement (12) en fonction de la différence de température et du débit massique de gaz d'échappement et
(d) des paramètres caractérisant l'opération de chauffage sont établis et prédéfinis de telle sorte que l'opération de chauffage fournisse l'apport d'énergie de consigne,

l'opération de chauffage comprenant une post-injection de carburant dans le moteur à combustion interne (10) après la fin de la combustion de l'injection principale par un système d'injection et

- un certain nombre ($n_{NE}$) de cylindres du moteur à combustion interne (10) dans lesquels la post-injection doit avoir lieu, et/ou
- un certain nombre (a) de plages de travail, dans lesquelles la post-injection doit avoir lieu, sont établies de telle sorte qu'une durée d'injection ($\Delta t_{NE}$) de la post-injection dépasse une durée minimale prédéfinie ($\Delta T_{ME,\,min}$).

**16.** Dispositif selon la revendication 15, **caractérisé en ce que** l'installation de purification des gaz d'échappement (12) comprend un filtre à particules et/ou un système de catalyseur, notamment un catalyseur à accumulation de $NO_x$ (16).

**17.** Dispositif selon la revendication 15 ou 16,
**caractérisé en ce que** l'on associe à l'installation de purification des gaz d'échappement (12) un système de capteurs pour détecter des températures et/ou des compositions de gaz d'échappement et/ou des composants de gaz d'échappement en des points de mesure sélectionnés.

**18.** Dispositif selon la revendication 17, **caractérisé en ce que** le système de capteurs comprend des sondes lambda, des palpeurs de température et des capteurs spécifiques pour la mesure des gaz.

**19.** Dispositif selon l'une quelconque des revendications 15 à 18, **caractérisé en ce que** le dispositif comprend un système d'injection du moteur à combustion interne (10).

**20.** Dispositif selon l'une quelconque des revendications 15 à 19, **caractérisé en ce que** le dispositif comprend un appareil de commande (38) dans lequel est consignée une procédure de commande de l'opération de chauffage sous forme numérisée.

**21.** Dispositif selon la revendication 20, **caractérisé en ce que** l'appareil de commande (38) est intégré dans un appareil de commande du moteur (30).

FIG. 1

FIG. 3

FIG. 2

S3

$n_{NE,min} < n_{NE} < n$
$a=1$

$n_{NE} = n_{NE} - 1$

$m_{NE,ges}$

$a=a+1$

$t_{NE}$

N

$a=a_{max}?$ — Y → S11

$\Delta t_{NE}$

Y

N — $n_{NE} = n_{NE,min}?$ — N — $\Delta t_{NE} > \Delta t_{NE,min}?$

Y

S7

FIG. 4

16